# DEMANDE DE BREVET EUROPEEN

(11) **EP 2 495 835 A1**
(43) Date de publication de la demande: **05.09.2012**
(21) Numéro de dépôt: 12157926.2
(22) Date de dépôt: 02.03.2012
(51) Int. Cl.: H02G 7/20

(54) **Armement voûte rigide destiné à être disposé en tête d'un poteau**

(30) Priorité: 02.03.2011 FR 1151711
(71) Demandeur: Dervaux Distribution, 42800 Saint Martin la Plaine (FR)
(72) Inventeur: Bon, Laurent, 42340 Veauche (FR); Rousset, Didier, 69590 Saint Symphorien/Coise (FR)
(74) Mandataire: Delorme, Nicolas

(57) **Abrégé**

Armement « voûte rigide » destiné à être disposé en tête d'un poteau pour supporter des conducteurs électriques **caractérisé en ce que** ledit armement comprend :
- un premier montant et un second montant (2), chacun des deux premier et second montants (2) présentant une structure identique formée par une portion rectiligne (2a) destinée à être fixée sur le poteau et une portion arrondie (2b) prolongée d'une portion de jonction (2c) rectiligne terminale, chaque montant (2) présentant une section transversale en L comprenant une semelle (8) destinée à venir en appui contre le poteau et une aile latérale.
- une première ferrure transversale (3) et une seconde ferrure transversale (3), chacune des première et deuxième ferrure transversale présentant une structure identique dotée d'une portion rectiligne de jonction (3a) à un montant (2) reliée par une zone courbe à une portion rectiligne de réception (3b) d'un conducteur, la portion de jonction recevant à son extrémité une platine de connexion permettant de relier deux ferrures transversales, chaque ferrure transversale (3) présentant une section transversale en L comprenant une semelle (8) destinée à venir en appui contre une portion de jonction d'un montant (2) et une aile latérale.

## Description

La présente invention concerne un dispositif d'armement disposé en tête d'un poteau pour supporter des conducteurs électriques, notamment dans des lignes à moyenne tension.

De manière classique, le transport électrique se fait par l'intermédiaire de lignes aériennes dont les conducteurs sont fixés sur un alignement de poteaux. La liaison mécanique entre le poteau et les conducteurs électriques est réalisée par un armement.

Conventionnellement dans les lignes à moyenne tension, l'armement peut être réalisé par un dispositif dit « voûte rigide » qui comprend une traverse qui est reliée au poteau vertical par deux montants. Ce type d'armement est globalement satisfaisant du point de vue de sa fonction technique. En revanche, il peut s'avérer lourd à mettre en oeuvre du fait de la présence d'une traverse de grande dimension.

Cette traverse de grande dimension a notamment l'inconvénient d'être lourde et encombrante à transporter. Par ailleurs, en ce qui concerne les montants il convient de disposer de deux références différentes (montant droit et gauche) pour supporter la traverse.

Il est rappelé que l'armement dit « en voûte rigide » est destiné à recevoir trois isolateurs répartis à chaque extrémité de la traverse et au centre de la traverse.

Dans ce contexte technique, un but de l'invention est de proposer un dispositif d'armement de type « voûte rigide » qui soit d'une mise en oeuvre aisée.

L'invention concerne un armement « voûte rigide » destiné à être disposé en tête d'un poteau pour supporter un ou plusieurs conducteurs électriques ; de plus ledit armement comprend :
- un premier montant et un second montant, chacun des deux premier et second montants présentant une structure identique formée par une portion rectiligne destinée à être fixée sur le poteau et une portion en arc de cercle prolongée d'une portion de jonction rectiligne; et
- une première ferrure transversale et une seconde ferrure transversale, chacune des première et deuxième ferrure transversale présentant une structure identique dotée d'une portion rectiligne de jonction à un montant reliée par une zone courbe à une portion rectiligne de réception d'un conducteur, la portion de jonction recevant à son extrémité une platine de connexion permettant de relier deux ferrures transversales entre elles.

Ainsi, l'invention fournit un armement pour poteau comprenant essentiellement quatre éléments identiques deux à deux. Cette disposition s'avère extrêmement bénéfique en termes de logistique et de mise en place puisque chacun des éléments est de relativement petite taille.

La structure en L des montants et ferrures permet de plus de les imbriquer lors du transport pour occuper un faible espace.

Selon une disposition de l'invention, chaque ferrure transversale présente une platine de connexion permettant de relier deux ferrures transversales.

En outre, la platine de connexion présente deux perçages dans chacun desquels est reçue une vis de fixation.

Il est également prévu que la platine de connexion possède de plus un perçage de réception d'un isolateur.

Selon une disposition complémentaire de l'invention, l'extrémité de la portion de réception d'une ferrure transversale possède une patte de réception d'un isolateur.

Pour sa bonne compréhension, l'invention est décrite en référence au dessin ci annexé représentant, à titre d'exemple non limitatif, une forme de réalisation d'un dispositif d'armement « voûte rigide » selon l'invention.
Figure 1 représente, en perspective et en vue éclatée, l'armement « voûte rigide » selon l'invention,
Figure 2 et figure 3 montrent, en perspective, les deux éléments essentiels constituant ce dispositif,
Figure 4 montre l'armement « voûte rigide » selon l'invention en position sur un poteau.

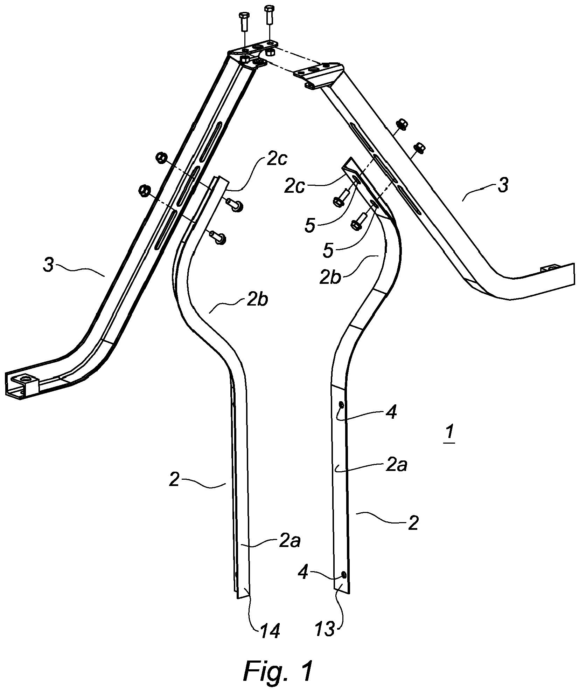

En se référant tout d'abord à la figure 1, il apparaît que l'armement voûte rigide 1 selon l'invention, comprend quatre éléments qui sont deux à deux identiques.

En effet, l'armement voûte rigide 1 selon l'invention comprend deux montants 2 identiques et deux ferrures transversales 3 également identiques.

Chaque montant 2 présente une structure en forme générale de crosse comprenant une portion rectiligne 2a dans laquelle sont ménagés deux perçages et une partie arrondie 2b comprenant une double courbure.

L'extrémité de la partie arrondie 2b de chaque montant 2 présente une portion rectiligne 2b dans laquelle sont disposés deux perçages 5. Chacun des montants 2 est réalisé dans un profilé métallique, de préférence galvanisé à chaud, et possède une section transversale en L présentant une semelle 13 et une paroi latérale 14.

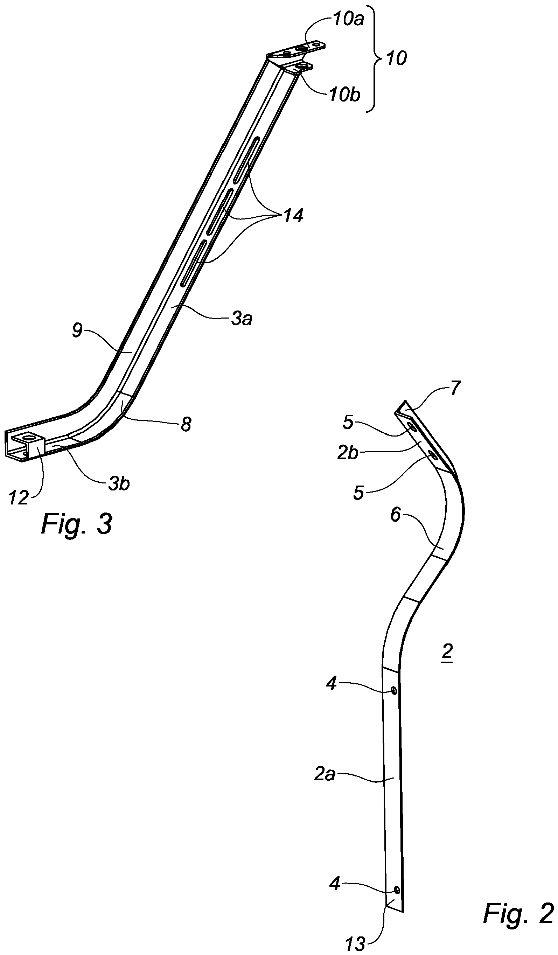

En ce qui concerne, la ferrure transversale 3 que l'on peut voir plus particulièrement à la figure 3, on constate que celle-ci présente également une section transversale en L dotée d'une semelle 8 et d'une paroi latérale 9 comprenant une portion rectiligne de jonction 3a reliée par une portion courbe à une portion rectiligne de réception 3b d'un isolateur qui supporte un conducteur.

A l'extrémité de la portion rectiligne de jonction 3a, on note la présence d'une platine de connexion 10 possédant deux ailes 10a et 10b parallèles, à savoir une aile principale 10a pourvue de trois perçages superposés à une aile secondaire 10b pourvue, pour sa part, d'un unique perçage.

L'extrémité de la portion rectiligne secondaire est, pour sa part, pourvue d'une patte de réception 12 formée d'un L métallique dont la branche, qui est parallèle à la semelle 8 de la ferrure transversale, possède un perçage qui est concentrique avec un perçage analogue pratiqué dans la semelle 8 elle-même.

La semelle de la ferrure transversale comprend, comme cela apparaît sur la figure 3, trois lumières 14 oblongues.

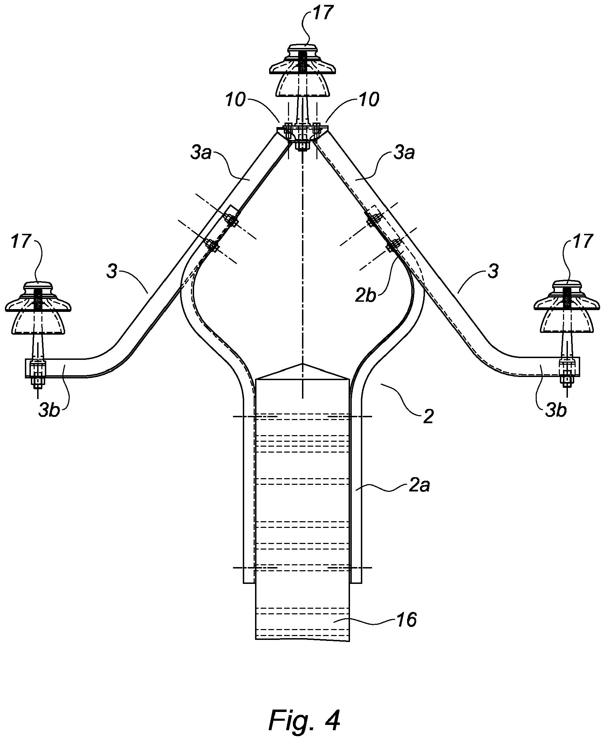

En se reportant à la figure 4 qui montre l'armement voûte rigide en position sur un poteau 16, on peut voir que les deux ferrures transversales sont jointes l'une à l'autre par leur platine de connexion.

Les deux platines de connexion 10 des deux ferrures transversales 3 sont engagées l'une dans l'autre et peuvent être assemblées par une paire de vis/écrous.

La jonction entre les deux montants 2 et les deux ferrures transversales 3 se fait également par deux vis écrous qui traversent les deux perçages de l'extrémité des montants 2 et sont engagés dans les lumières 14 pratiquées dans les ferrures transversales.

L'armement ainsi assemblé et fixé sur le poteau 16 peut être équipé d'isolateurs 17 sur lesquels les conducteurs électriques pourront être fixés.

L'invention fournit ainsi un dispositif d'armement voûte rigide 1 entièrement modulaire constitué d'éléments standardisés et de petites tailles, ce qui en rend la logistique beaucoup plus simple.

En effet, les interventions sur site peuvent se faire avec, par exemple, de plus petits véhicules puisque les demi-traverses peuvent être stockées de manière moins encombrante.

Bien entendu, l'invention ne se limite pas à la forme de réalisation décrite ci-dessus mais elle en embrasse au contraire toutes les variantes.

## Revendications

1. Armement « voûte rigide » destiné à être disposé en tête d'un poteau pour supporter des conducteurs électriques **caractérisé en ce que** ledit armement comprend :
- un premier montant et un second montant (2), chacun des deux premier et second montants (2) présentant une structure identique formée par une portion rectiligne (2a) destinée à être fixée sur le poteau et une portion arrondie (2b) prolongée d'une portion de jonction (2c) rectiligne terminale, chaque montant (2) présentant une section transversale en L comprenant une semelle (8) destinée à venir en appui contre le poteau et une aile latérale.
- une première ferrure transversale (3) et une seconde ferrure transversale (3), chacune des première et deuxième ferrure transversale présentant une structure identique dotée d'une portion rectiligne de jonction (3a) à un montant (2) reliée par une zone courbe à une portion rectiligne de réception (3b) d'un conducteur, la portion de jonction recevant à son extrémité une platine de connexion permettant de relier deux ferrures transversales, chaque ferrure transversale (3) présentant une section transversale en L comprenant une semelle (8) destinée à venir en appui contre une portion de jonction d'un montant (2) et une aile latérale.

2. Armement « voûte rigide » selon la revendication 1, **caractérisé en ce que** chaque ferrure transversale (3) présente une platine de connexion (10) permettant de relier entre elles deux ferrures transversales.

3. Armement « voûte rigide » selon la revendication 2, **caractérisé en ce que** la platine de connexion (10) possède une aile principale (10a) pourvue de trois perçages, superposée à une aile secondaire (10b) pourvue d'un unique perçage.

4. Armement « voûte rigide » selon l'un des revendications 1 à 3, **caractérisé en ce que** l'extrémité de la portion de réception d'une ferrure transversale possède une patte de réception (12) d'un isolateur.
